# EUROPEAN PATENT SPECIFICATION

(11) **EP 4 138 061 B1**
(45) Date of publication and mention of the grant of the patent: **30.09.2026**
(21) Application number: 22188705.2
(22) Date of filing: 04.08.2022
(51) Int. Cl.: G08G 5/22, G08G 5/26, G06F 3/0482, G06F 40/205, B64D 43/00

(54) **SYSTEMS AND METHODS PROVIDING A USER INTERFACE (UI) BETWEEN AN AIR TRAFFIC CONTROL-PILOT CONVERSATION AND A DESTINATION AVIONICS SYSTEM**
SYSTEME UND VERFAHREN ZUM BEREITSTELLEN EINER BENUTZERSCHNITTSTELLE (UI) ZWISCHEN EINEM GESPRÄCH ZWISCHEN FLUGVERKEHRSKONTROLLE UND PILOT UND EINEM ZIEL-AVIONIKSYSTEM
SYSTÈMES ET PROCÉDÉS FOURNISSANT UNE INTERFACE UTILISATEUR (IU) ENTRE UNE CONVERSATION PILOTE-CONTRÔLE DE LA CIRCULATION AÉRIENNE ET UN SYSTÈME AVIONIQUE DE DESTINATION

(30) Priority: 04.10.2021 US 202117449839; 20.08.2021 IN 202111037793
(43) Date of publication of application: 22.02.2023
(73) Proprietor: Honeywell International Inc., Charlotte, NC 28202 (US)
(72) Inventor: SAPTHARISHI, Hariharan, Charlotte, 28202 (US); BALADHANDAPANI, Gobinathan, Charlotte, 28202 (US); GUPTA, Pavan, Charlotte, 28202 (US); NATARAJAN, Reena, Charlotte, 28202 (US)
(74) Representative: Ingrassia, Fisher & Lorenz UK Ltd.

(56) References cited:
- US-A1- 2019 090 180
- US-A1- 2021 083 696
- US-A1- 2021 223 773

## Description

### TECHNICAL FIELD

The following disclosure generally relates to flight display systems. More particularly, the following disclosure relates to systems and methods providing a user interface (UI) between an air traffic control-pilot conversation and a destination avionics system.

### BACKGROUND

A technical problem is presented in aviation environments when equipment settings are incorrect before or during a flight. A solution is to have the pilot perform many cross-checking operations. The cross-checking process is intended to reduce the likelihood of errors. The cross-checking process conventionally involves verbal and visual verification of an intended action in the cockpit prior to its execution. The visual verification generally involves checking equipment settings, altimeter pressure settings, a cleared altitude, a frequency change requirement, and navigation routings. When there is more than one pilot, cross-checking may be enhanced by having one pilot set the equipment settings and a second pilot cross-check them. Often, the cross validation is either done through keypad entry noted while receiving an ATC clearance or playback in an audio panel.

However, a technical problem continues to exist because both approaches increase crew workload. Playback audio often can store only few clearances, and Human error is possible in keypad entry. The cross-checking process may fail because of a misheard message, fatigue, a memory lapse, an incorrect or incomplete appreciation of the situation, an insufficient crosscheck, language barriers, distraction, communication problems, ineffective monitoring, a data use error, a non-compliance with Standard Operating Procedures (SOP), and the like. These errors can occur irrespective of pilot experience, aircraft type, or location. Additionally, in Single Pilot Operations (SPO), there is no second pilot to perform cross-checking.

US 2021/223773 Al relates to aircraft systems capable of autonomously utilizing hands-free functionality and automation behaviour to enable remote operation based on operating context.

Accordingly, improved flight display systems and methods that close the loop on the potential for cross-checking errors are desirable. The desirable flight display system will provide a user interface (UI) between an air traffic control (ATC)-pilot conversation on a portable device and a destination avionics system. Furthermore, other desirable features and characteristics of the disclosure will become apparent from the subsequent detailed description and the appended claims, taken in conjunction with the accompanying drawings, brief summary, technical field, and this background of the disclosure.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Aspects and preferred embodiments of the invention are defined in the appended claims. Disclosed herein is a system providing a user interface (UI) between an air traffic control transcription (ATCT) page on a portable device and a destination avionics system, the system comprising: a parser module configured to: receive an air traffic control (ATC) message; parse the ATC message into a target avionic system and a respective avionic data; map the target avionic system to a destination avionic system; and store in a clearance database, execution data comprising the ATC message, the target avionic system, the destination avionic system, and the respective avionic data; a user interface (UI) generator module configured to: render, on the ATCT page, a target UI button to indicate the target avionic system in the ATC message; display, responsive to a user selection of the target UI button, a data preview window comprising the respective avionic data and a GUI object representing the destination avionic system; and a coordinator module configured to send the avionic data to the destination avionic system, responsive to a user selection of the GUI object representing the destination avionic system.

Also disclosed herein is a method providing a user interface (UI) between an air traffic control transcription (ATCT) page on a portable device and a destination avionics system, the method comprising: at a controller circuit, receiving an air traffic control (ATC) message; parsing the ATC message into a target avionic system and a respective avionic data; mapping the target avionic system to a destination avionic system; and rendering, on the ATCT page, a target UI button to indicate the target avionic system in the ATC message; displaying, responsive to a user selection of the target UI button, a data preview window comprising the respective avionic data and a GUI object representing the destination avionic system; and sending the avionic data to the destination avionic system, responsive to a user selection of the GUI object representing the destination avionic system.

Also disclosed herein is a system providing a user interface (UI) between an air traffic control transcription (ATCT) page on a portable device and multiple destination avionic systems onboard an aircraft, the system comprising: a processor operationally coupled to the portable device and the multiple destination avionic systems, and configured to: receive an air traffic control (ATC) message; parse the ATC message into a target avionic system and a respective avionic data; map the target avionic system to a destination avionic system of the multiple destination avionic systems on the aircraft; and render, on the ATCT page, a target UI button to indicate the target avionic system in the ATC message; display, responsive to a user selection of the target UI button, a data preview window comprising the respective avionic data and a GUI object representing the destination avionic system; and sending the avionic data to the destination avionic system, responsive to a user selection of the GUI object representing the destination avionic system.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWING FIGURES

At least one example of the present invention will hereinafter be described in conjunction with the following figures, wherein like numerals denote like elements, and:
FIG. 1 shows a functional block diagram of an aircraft including various systems, including a system for providing a user interface (UI) between an ATC-pilot conversation window on a portable device and a destination avionics system, in accordance with exemplary embodiments of the present disclosure;
FIG. 2 is an architectural block diagram of one or more application modules that may be operating in the system for providing a user interface (UI) between an air traffic control ATC-Pilot conversation window on a portable device and a destination avionics system, in accordance with exemplary embodiments of the present disclosure;
FIG. 3 is a flowchart illustrating a method for providing a user interface (UI) between an air traffic control ATC-Pilot conversation window on a portable device and a destination avionics system, in accordance with exemplary embodiments of the present disclosure; and
FIGS 4-5 provide example use cases for exemplary embodiments of the present disclosure.

### DETAILED DESCRIPTION

The following detailed description is merely exemplary in nature and is not intended to limit the invention or the application and uses of the invention. As used herein, the word "exemplary" means "serving as an example, instance, or illustration." Thus, any weather or flight display system or method embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, programmable logic arrays, application specific integrated circuits, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

As mentioned, a technical problem continues to exist in confirming equipment settings during flight operations because conventional solutions rely on cross-checking procedures. As described above, the cross-checking process may fail for a variety of reasons.

Accordingly, improved flight display systems and methods that close the loop on the potential for cross-checking errors are desirable. Generally disclosed herein are systems and methods for providing a user interface (UI) between an air traffic control ATC-Pilot conversation window on a portable device and a destination avionics system. This applies in a context in which an air traffic control transcription (ATCT) window may be displayed on a display device within a portable electronic device, and an avionics systems control page or cockpit display page, such as an FMS page, may be displayed on a display device in a cockpit of the aircraft. Provided embodiments determine context and identify target avionics for each ATC clearance message.

As will be described with more context below, the following examples of terms are provided: In various embodiments, "target avionic system" is a general category, such as a radio, and a "destination avionic system" is a specific avionic system, for example, with respect to "radio," the destination avionic system could be Communication 1 active, Communication 1 standby, Navigation radio 1 or Navigation radio 2. In other embodiments, the "target avionic system" can be a page where the pilot entry will be made or the system where the data will be disabled such as Radio tunning, Flight controls etc.

While the following exemplary embodiments are discussed in terms of an aircraft in flight, it should be appreciated that other embodiments may be employed in other contexts, such as ocean-faring vessels, rail-travelling locomotives, automobiles, and the like. Embodiments of the disclosure may be implemented wherever a user may be dividing operating attention between a display on a portable electronic device and display mounted with a vehicle.

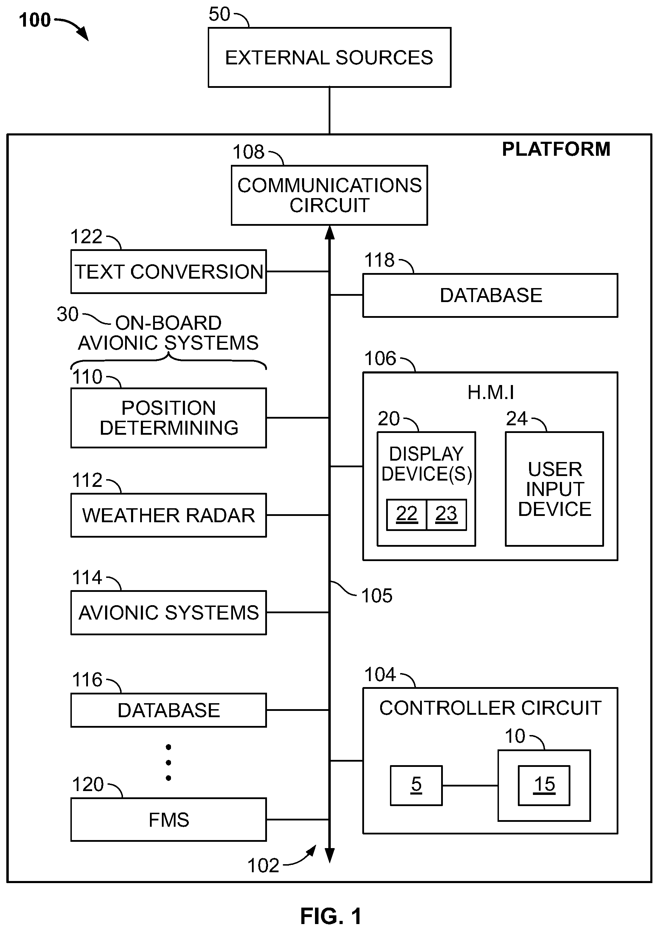

FIG. 1 is a block diagram of a system for providing a user interface (UI) between an air traffic control ATC-Pilot conversation window on a portable device and a destination avionics system (shortened herein to "system" **102**), in accordance with an exemplary and non-limiting embodiment of the present disclosure. The system **102** may be utilized onboard a mobile platform as described herein. In various embodiments, the mobile platform is an aircraft **100,** which carries or is equipped with the system **102.** Aircraft **100** may be any type of vehicle that can travel through the air (*i.e.,* without physical contact with terrain or water). As such, aircraft **100** may be any type of airplane (regardless of size or propulsion means, ranging from large, turbine-powered commercial airplanes to small, electrically-powered aircraft), rotorcraft (helicopter, gyrocopter), lighter-than-air vessel (hot-air balloon, blimp), or glider, for example.

As schematically depicted in FIG. 1, system **102** includes the following components or subsystems, each of which may assume the form of a single device or multiple interconnected devices: a controller circuit **104** operationally coupled to: an HMI **106** (human-machine interface); a communications circuit **108;** one or more on-board systems **30,** including an FMS **120,** and a clearance database **118.** In various embodiments, the controller circuit **104** communicates with the components of the system **102** via a communication bus **105.**

An ATC clearance message, shortened herein to ATC message, is referred to herein. The ATC message represents an originally received ATC message that has further been converted from speech to text if it was not originally received as text. The speech to text conversion and sorting of text into ATC messages is understood to be performed by existing components, as known in the industry. A source **122** is shown as a source of the text-formatted ATC message and indicates a consolidation of these existing components. Some non-limiting examples of sources of the original ATC message include a communication radio (COM), pilot audio from within the cockpit, Datalink, and aircraft communication addressing and reporting system (ACARS).

The human-machine interface, HMI **106,** may include one or more display device(s) **20** and a user input device **24.** The user input device **24** may include any combination of a keyboard, cursor control device, voice input device, gesture input apparatus, or the like. In various embodiments, the HMI **106** is an integration of a user interface **18** and a display device **20.**

The display device(s) **20** can include any number and type of fixed, onboard, image generating devices on which one or more flight management system (FMS) pages **23** may be produced/displayed for controlling avionic systems **30** (accordingly, FMS pages **23** may also be referred to as avionic pages). The display device(s) **20** can include any number and type of image generating devices located on a portable electronic device, providing one or more pilot-ATCT pages **22** for the pilot to review and respond to Air Traffic Communication Transcription (ATCT). The display device(s) **20** may be embodied as a touch screen display. When the system **102** is utilized for a manned aircraft, display device **20** may be affixed to the static structure of the Aircraft cockpit as, for example, a Head Down Display (HDD) or Head Up Display (HUD) unit. Alternatively, display device **20** may assume the form of a movable display device (e.g., a pilotworn display device) or a portable display device, such as an Electronic Flight Bag (EFB), a laptop, or a tablet computer carried into the Aircraft cockpit by a pilot.

In various embodiments, the HMI **106** further includes or has integrated therein an audio system capable of emitting speech and sounds, as well as of receiving speech input. In various embodiments, the HMI **106** may include any of: a graphical user interface (GUI), a speech recognition system, and a gesture recognition system. Via various display and graphics systems processes, the controller circuit **104** may command and control the generation, by the HMI **106,** of a variety of graphical user interface (GUI) objects or elements described herein, including, for example, buttons, sliders, and the like, which are used to prompt a user to interact with the human-machine interface to provide user input, and to activate respective functions and provide user feedback, responsive to received user input at the GUI element.

The on-board systems **30** generally include a position-determining system **110** sensors, a weather radar system **112,** various avionic systems **114,** and a database **116.** The on-board systems **30** may include a flight management system (FMS) **120.**

The position-determining system **110** supplies various types of aircraft status data or measurements to controller circuit **104** and the communication bus **105** during aircraft flight. In various embodiments, the aircraft status data includes, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data. The position-determining system **110** may be realized as one or more of a global positioning system (GPS), inertial reference system (IRS), or a radio-based navigation system (*e.g*., VHF omnidirectional radio range (VOR) or long-range aid to navigation (LORAN)), and it may include one or more navigational radios or other sensors suitably configured to support operation of the aircraft **100.** In some embodiments, the position-determining system **110** may also obtain and/or determine the heading of the aircraft **100** (*i.e.,* the direction that aircraft **100** is traveling relative to some reference) using a magnet compass or a magnetometer, for example. The position-determining system **110** may also include a barometric altimeter such that the position of the aircraft **100** may be additionally determined with reference to a barometric altitude. In some embodiments, the GPS may alternatively or additionally provide altitude information as part of the position-determining system **110.** As such, in an exemplary embodiment, the position-determining system **110** can obtain and/or determining the instantaneous position and altitude of the aircraft **100,** and the position-determining system **110** generates aircraft status data for the aircraft, including the current location of the aircraft **100** (*e.g.,* the latitude and longitude) and the altitude and heading of the aircraft **100.** The position-determining system **110** may provide this aircraft status data to the controller circuit **104** and the flight management system **120** to support their operation, as described herein.

The weather radar system **112** provides weather data for the volume of space around the aircraft **100.** In various embodiments, the weather radar system **112** is configured to generate reflectivity data at various altitudes over a geographic area (for example a distance range in front of the aircraft).

In contrast to the sensing functions provided by position determining system **110** and weather radar system **112,** the avionic systems **114** represent onboard the engine and flight configuration equipment. Signals provided by onboard avionic systems may include an overheated engine, a faulty flap, a blade-out condition in an engine fan, and the like. Signals consumed by the avionic system 114 may include engine configuration commands, flap position commands, and the like.

In practice, the database **116** may be realized as one or more different onboard databases, each being a computer-readable storage media or memory. In various embodiments, two- or three-dimensional map data may be stored in the database **116,** including airport features data, geographical (terrain), buildings, bridges, and other structures, street maps, and navigational databases, which may be updated on a periodic or iterative basis to ensure data timeliness. This map data may be uploaded into the database **116** at an initialization step and then periodically updated, as directed by either a program **15** update or by an externally triggered update.

Flight management system **120** provides the primary navigation, flight planning, and route determination and *en route* guidance for the aircraft **100.** The flight management system **120** may contribute aircraft status data provided to controller circuit **104,** such as, the aircraft's current position and flight direction (*e.g.,* heading, course, track, *etc*.), the aircraft's airspeed, ground speed, altitude (*e.g.*, relative to sea level), pitch, and other important flight information if such information is desired. In various embodiments, flight management system **120** may include any suitable position and direction determination devices that can provide controller circuit **104** with at least an aircraft's current position (*e.g*., in latitudinal and longitudinal form), the real-time direction (heading, course, track, *etc*.) of the aircraft in its flight path, and other important flight information (*e.g.,* airspeed, altitude, pitch, attitude, *etc*.). Flight management system **120** and controller circuit **104** cooperate to guide and control aircraft **100** during all phases of operation, as well as to provide other systems of aircraft **100** with flight data generated or derived from flight management system **120.**

As will be described in more detail below, the clearance database **118** is a storage location used by the system **102** during operation. In an embodiment, the system **102** stores execution data in a clearance lookup table in the clearance database **118.** In various embodiments, the execution data is an ATCT log in the form of a data string comprising the ATC message, a target avionic system, a respective destination avionic system, and the respective avionic data. In an embodiment, the system **102** may store contextual information (e.g., via a contextual processing module) for various ATC messages such that they link the instructions within an ATC message to one or more destination avionic systems. The clearance database **118** may be stored in memory onboard the controller circuit **104,** or in a separate storage or database **116.** In various embodiments, the system **102** references the clearance database **118** to determine whether a pilotinitiated action (received via a cockpit display page, such as an FMS page **23**) has an associated entry before displaying text or a graphical user interface (GUI) object on a respective display device **20.**

It should be appreciated that aircraft **100** includes many more additional features (systems, databases, *etc*.) than the illustrated systems **105 - 118.** For purposes of simplicity of illustration and discussion, however, the illustrated aircraft **100** omits these additional features.

External sources **50** may include a weather subscription service, other subscription service, traffic monitoring service, neighbor traffic, air traffic control (ATC), ground stations, and the like.

The term "controller circuit," as appearing herein, broadly encompasses those components utilized to carry-out or otherwise support the processing functionalities of the system **102.** Accordingly, controller circuit **104** can be implemented as a programmable logic array, application specific integrated circuit, system on a chip (SOC), or other similar firmware, as well as by a combination of any number of individual processors, flight control computers, navigational equipment pieces, computer-readable storage devices (including or in addition to memory **10**), power supplies, storage devices, interface cards, and other standardized components.

In various embodiments, as depicted in FIG. 1, the controller circuit **104** embodies an enhanced computer system, having one or more processors **5** operationally coupled to computer-readable storage media or memory **10,** having stored therein at least one novel firmware or software program **15** (generally, computer-readable instructions that embody an algorithm) for carrying-out the various process tasks, calculations, and control/display functions described herein. During operation, the controller circuit **104** may be programmed with and execute the at least one firmware or software program, for example, program **15,** that embodies an algorithm for receiving, processing, mapping, contextualizing, generating, and altering renderings, described herein, to thereby perform the various process steps, tasks, calculations, and control/display functions described herein.

Controller circuit **104** may exchange data, including real-time wireless data, with one or more external sources **50,** such as a configuration file manager or subscription service to support operation of the system **102** in embodiments. In this case, the controller circuit **104** may utilize the communications circuit **108** to manage bidirectional wireless data exchange over a communications network, such as a public or private network implemented in accordance with Transmission Control Protocol/Internet Protocol architectures or other conventional protocol standards. Encryption and mutual authentication techniques may be applied, as appropriate, to ensure data security. In various embodiments, the communications circuit **108** is integrated within the controller circuit **104.**

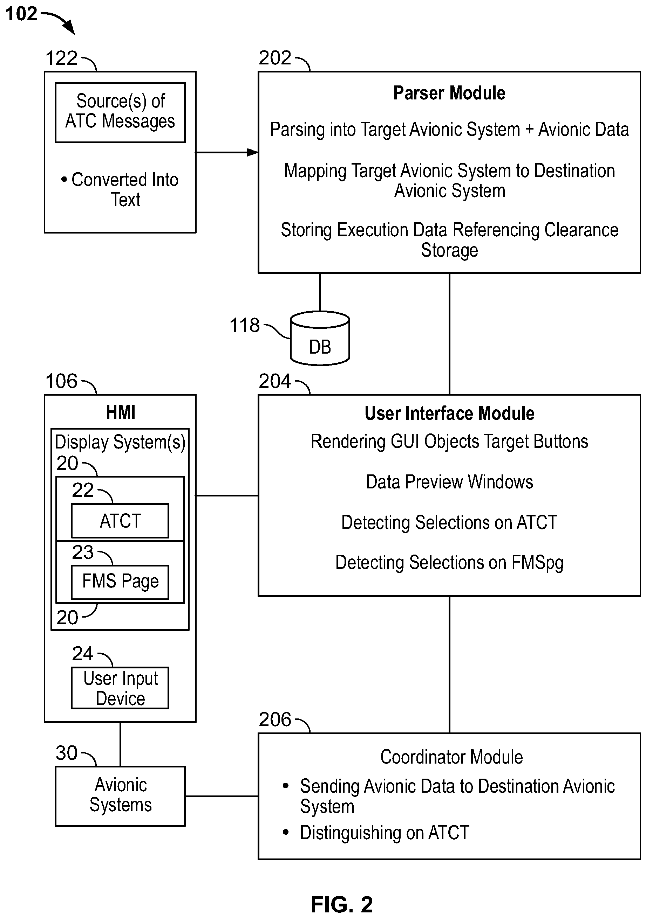

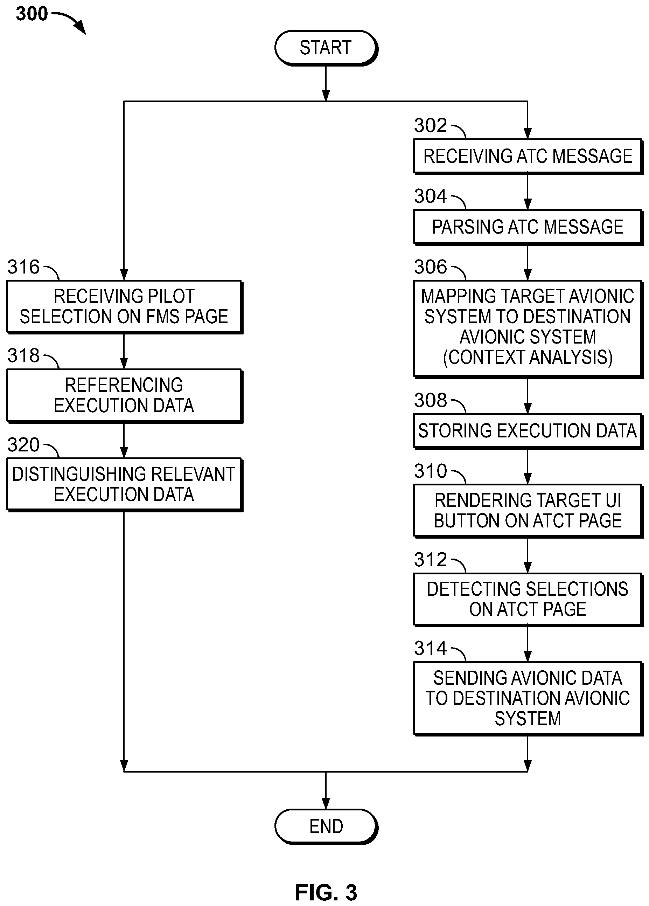

Turning now to FIGS. 2-3, and with continued reference to FIG. 1, the operation of the systems and methods of the present invention are described. FIG. 2 describes one or more application modules that may be operating in the system **102,** with reference to example operations that they each may control. FIG. 3 provides a flowchart of a method **300** for on-demand enabling of display features for an avionic display in an aircraft while the aircraft is in flight is described, in accordance with exemplary embodiments of the present disclosure. For illustrative purposes, the following description of method **300** may refer to elements mentioned above in connection with FIG. 1. In practice, portions of method **300** may be performed by different components of the described system. It should be appreciated that method **300** may include any number of additional or alternative tasks, the tasks shown in FIG. 3 need not be performed in the illustrated order, and method **300** may be incorporated into a more comprehensive procedure or method having additional functionality not described in detail herein. Moreover, one or more of the tasks shown in FIG. 3 could be omitted from an embodiment of the method **300** if the intended overall functionality remains intact.

A parser module **202** performs the operations of receiving (at **302**) the ATC message from source **122** and parsing (at **304**) the ATC message into a target avionic system (e.g., radio) and a respective avionic data.

The parser module **202** performs the operation of mapping the target avionic system to a destination avionic system at **306.** To perform **306,** the system **102** may reference the clearance database **118** and execute mapping algorithms to put the ATC message into context of one or more destination avionic systems **30.**

In various embodiments, the mapping algorithms include a publish-subscription module which implements a publish-subscribe pattern for speech data received from a speech processing system. In these embodiments, a pilot may define an interface for publishing topics, and associated pilot-defined published topics will be combined with the topics identified by the contextual processing module, which analyzes received speech, the output being "speech data of interest." In these embodiments, non-limiting examples of a subscription client include avionic systems that may want to receive the "speech data of interest," and include a Flight Plan system, a RAAS system, a TOLD system, and an EGPWS system. A respective client subscription component in each avionics sub system which receives the speech data of interest responsive to the publish-subscribe module generating the speech data of interest.

Non-limiting examples of ATC clearance messages and target avionic systems identified via the mapping algorithms are presented in Table 1.

**Table 1.**

| **ATC Message** | **avionic systems** |
|---|---|
| | TOLD, EGPWS, FMS |
| WIND IS ZERO SEVEN ZERO AT SIX | FMS, TOLD |
| | Displays |
| | TCAS, FMS |
| | TCAS, FMS |
| | RAAS |
| | RAAS |
| | TOLD, Displays |
| | Displays |
| | TOLD, Displays |
| | LIGHTS |
| | RADIOS |
| | TOLD, Wheels, & Brakes |
| TEN LEFT HAS TOO MUCH CONTAMINATION | Wheels & Brakes |

At **308,** the parser module **202** also handles storage of execution data into the clearance database **118.** The parser module **202** stores the execution data in a clearance lookup table, as a data string, the target avionic system, the destination avionic system, and the respective avionic data.

The user interface module **204** is in operable communication with the display device(s) 20 that render the ATCT page **22** and the display device(s) **20** that render a cockpit display page, such as the FMS page **23.** The interface module **204** adds or overlays new graphical user interface (GUI) objects on the ATCT page **22** and detects additional user interactions on each of the ATCT page **22** and the FMS page **23.**

At **310,** the user interface module **204** renders a target user interface (UI) button on the ATCT page **22.** For example, at **310,** the user interface module **204** may display a target UI button to prompt the user to view a destination avionic system. In various embodiments, the system **102** determines that there are multiple target avionic systems, and at **310,** the user interface module **204** displays a respective target UI button for each of the multiple target avionic systems.

At **312,** a user interface module **204** further detects user input on the ATCT page **22** (e.g., a user selection of a target UI button) and, responsive thereto, display a data preview window comprising the respective avionic data and a graphical user interface (GUI) object representing a destination avionic system associated with the target avionic system. In some embodiments, the data preview window overlays the entire area of an ATCT dialog box. In various embodiments, the system **102** determines that target avionic system has more than one potential destination avionic system, and at **312,** the user interface module **204** displays a respective graphical user interface (GUI) object for each of the more than one potential destination avionic systems associated with the target avionic system.

At **314,** a coordinator module **206** performs the operations of sending the avionic data to the destination avionic system, responsive to receiving/detecting a user selection of the destination avionic system in the data preview page on the ATCT **22.**

As mentioned, the user interface module **204** may also perform the task of detecting user/pilot selections made in the cockpit display page or FMS page **23** (at **316**), such as knob rotation or any other input. Responsive to detecting user activity such as a user selection of a data entry on the FMS page **23,** the interface module **204** may reference (at **318**) the clearance database **118** to determine whether any execution data is relevant to the data entry that was selected. Responsive to determining that there is execution data that is relevant to the user activity on the FMS page (e.g., the data entry that was selected), the user interface module **204** may (at **320**) visually distinguish the relevant execution data on the ATCT page. In an example embodiment, the user interface module **204** visually distinguishes the relevant execution data by highlighting it while keeping remaining text unhighlighted.

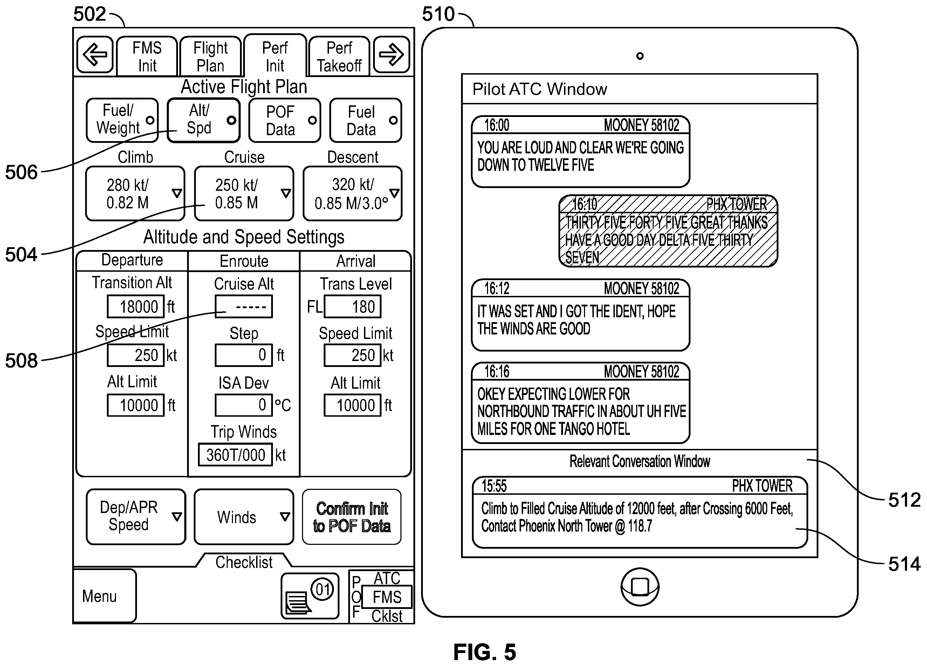

In another example, the system **102** may determine that an FMS page is rendered on a display system in the aircraft; and responsive to detecting user activity on the FMS page, (i) search the execution data for a relevant entry for the user activity, the relevant entry defined as having a parameter used for the selected user activity, and (ii) overlay a relevant conversation window on the ATCT page on the portable device, the relevant conversation window rendering an alphanumeric message associated with the relevant entry (see FIG. 5 for an example relevant conversation window). Non-limiting examples of the parameter used for the operation includes one or more of: an altitude, a ground speed, an air temperature, a runway, an arrival procedure, and a departure procedure.

From **314** or **320,** the method **300** may end or cycle back to the start. In various embodiments, the method **300** can keep cycling until the aircraft lands.

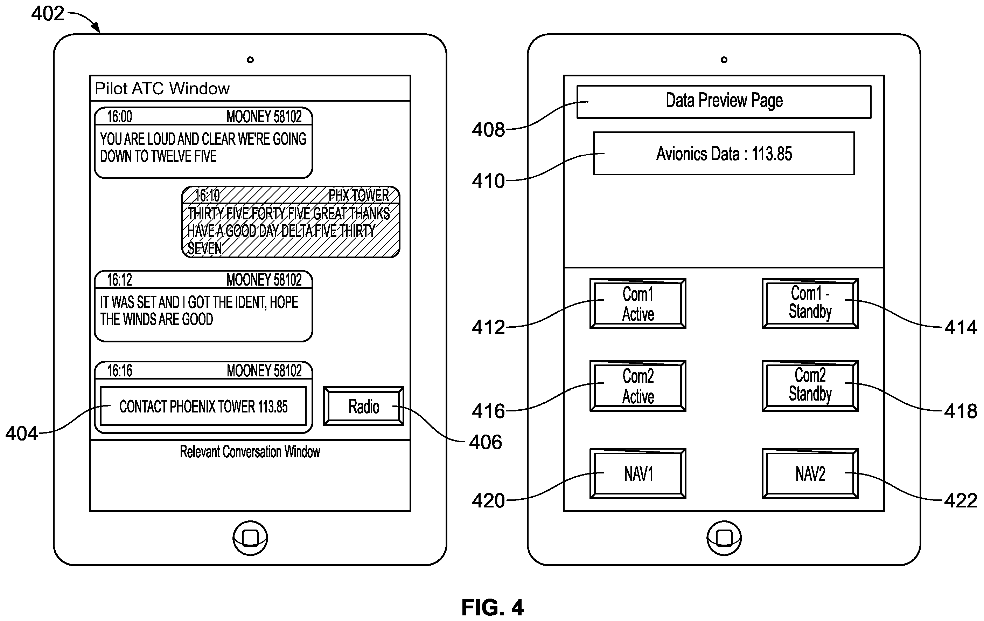

FIG. 4 provides an example use case. The ATCT page **402** is displayed. The ATC message **404** is a recognized ATC clearance message, and the system **102** has identified "Radio" as the single target avionic system. If another target avionic system were identified, it would be displayed alongside the "Radio" target UI button **406.** Responsive to receiving a pilot selection of the "Radio" target UI button **406,** the data preview page **408** is displayed on the ATCT display device. Data preview page **408** displays the avionic data **410** ("Avionics data: 113.85" in this example), and one or more potential destination avionic systems. In this example, there are six potential destination avionic systems: Com1 Active (**412**), Com1 Standby (**414**), Com2 Active (**416**), Com2 Standby (**418**), Nav1 (**420**) and Nav2 (**422**). As mentioned above, responsive to receiving a pilot selection of one of the potential destination avionic systems, the avionics data **410** will be automatically sent to the selected destination avionic systems, without further user input.

FIG. 5 provides another example use case. In this example, the pilot has navigated to the Active Flight Plan on a "Perf Init" tab on the FMS page 502, and data elements associated with the active flight plan are displayed. The pilot selects "Cruise" **504** and, responsive thereto, the system **102** references previous ATCT logs in the execution data stored in the clearance database **118,** and promptly, responsive to finding relevant execution data, and without further user input, displays it on the ATCT page **22.** As mentioned above, these ATCT logs store the avionic data and the ATC message. In this example, the relevant execution data found and displayed for Cruise **504** is an ATC message, "Climb to 12000 feet, after crossing 6000 feet, contact Phoenix North Tower @ 118.7" after departure (**514,** displayed in the relevant conversation window **512** that is overlaid on the ATCT page **510.**

In various embodiments, any action a pilot starts taking on the FMS page **23,** e.g., by starting to dial a knob or entering the data field, will trigger the search of the execution data in the clearance database **118** and display relevant execution data promptly, and without further user input, in ATCT window **22.**

Accordingly, the present disclosure has provided several embodiments of systems and methods for providing a user interface (UI) between an air traffic control ATC-Pilot conversation window on a portable device and a destination avionics system. The target UI button provided on the ATCT page enables quick access to the avionic data associated with an ATCT message. Additionally, a pilot may bring up an ATCT message that is tied to (relevant to) a data field the pilot has navigated to on an FMS page. The disclosed systems and methods provide an objectively improved HMI over available avionics display systems, at least in part, by adding new features and responses to each of the ATCT page **22** and to the FMS page **23.**

Although an exemplary embodiment of the present disclosure has been described above in the context of a fully-functioning computer system (e.g., system **102** described above in conjunction with FIG. 1), those skilled in the art will recognize that the mechanisms of the present disclosure are capable of being distributed as a program product (e.g., an Internet-disseminated program **15** or software application) and, further, that the present teachings apply to the program product regardless of the particular type of computer-readable media (e.g., hard drive, memory card, optical disc, etc.) employed to carry-out its distribution.

Terms such as "comprise," "include," "have," and variations thereof are utilized herein to denote non-exclusive inclusions. Such terms may thus be utilized in describing processes, articles, apparatuses, and the like that include one or more named steps or elements but may further include additional unnamed steps or elements.

## Claims

1. A system providing a user interface (UI) between an air traffic control transcription (ATCT) page on a portable device and a destination avionics system, the system comprising:
a parser module (202) configured to:
receive an air traffic control (ATC) message;
parse the ATC message into a target avionic system and a respective avionic data,
the target avionic system being a general category of avionic system and comprising one or more of: a radio system, a Takeoff and Landing Data (TOLD) system, a ground proximity warning (EGWPS) system, a display system, a flight management system (FMS), a Traffic collision and avoidance (TCAS) system, an aircraft lights system, an aircraft wheels system, an aircraft brakes system and a Runway Awareness and Advisory (RAAS) system;
map the target avionic system into multiple destination avionic systems using a mapping algorithm and with reference to a clearance database (118), the destination avionic system being a specific avionic system of the general category of avionic system, the clearance database containing contextual information to link avionic data to a respective destination avionic system; and
store in the clearance database, execution data comprising the ATC message, the target avionic system, the multiple destination avionic systems and the respective avionic data; and
a user interface (UI) generator module (204) configured to:
render, on the ATCT page, a target UI button (406) to indicate the target avionic system in the ATC message;
display, responsive to a user selection of the target UI button, a data preview window (408) comprising the respective avionic data and, for each of the multiple destination avionic systems, a respective GUI object (412, 414, 416, 418, 420, 422) representing the destination avionic system; and
wherein a coordinator module (206) is configured to determine, from the data preview window, a user-selected destination avionic system from among the multiple destination avionic systems and send the avionic data to the user-selected destination avionic system, responsive to a user selection of the GUI object representing the destination avionic system.

2. The system of claim 1, wherein the avionic data in the data preview window is editable.

3. The system of claim 1, wherein
the parser module (202) is further configured to:
parse the ATC message into two or more target avionic systems, each having a respective avionic data;
for each of the two or more target avionic systems, map the target avionic system to a respective destination avionic system; and
for each of the two or more target avionic systems, store, as a data string, the target avionic system, the destination avionic system, and the respective avionic data;
the user interface (UI) generator module further configured to:
for each of the two or more target avionic systems, render, on the ATCT page, a respective target UI button to indicate the target avionic system;
display, responsive to a user selection of a target UI button from among the two or more target UI buttons, the data preview window comprising, for the selected target UI button, the respective avionic data and a GUI object representing the destination avionic system.

4. The system of claim 5, wherein the data preview window further comprises a next UI object, and wherein the coordinator module is further configured to close the data preview window and restore the ATCT page, responsive to a user selection of the next UI object.

5. The system of claim 1, wherein the coordinator module (206) is further configured to:
determine that a cockpit display page is rendered on a display system in the aircraft; and
responsive to detecting user activity on the cockpit display page, (i) searching the execution data for a relevant entry for the user activity, the relevant entry defined as having a parameter used for the selected user activity, and (ii) overlaying a relevant conversation window on the ATCT page on the portable device, the relevant conversation window rendering an alphanumeric message associated with the relevant entry.

6. The system of claim 7, wherein the parameter used for the operation includes one or more of: an altitude, a ground speed, an air temperature, a constraint, a frequency, a waypoint, a runway, an arrival procedure, and a departure procedure.

7. A method providing a user interface (UI) between an air traffic control transcription (ATCT) page on a portable device and a destination avionics system, the method comprising:
at a controller circuit,
receiving (302) an air traffic control (ATC) message;
parsing (304) the ATC message into a target avionic system and a respective avionic data,
the target avionic system being a general category of avionic system and comprising one or more of: a radio system, a Takeoff and Landing Data (TOLD) system, a ground proximity warning (EGWPS) system, a display system, a flight management system (FMS), a Traffic collision and avoidance (TCAS) system, an aircraft lights system, an aircraft wheels system, an aircraft brakes system and a Runway Awareness and Advisory (RAAS) system;
mapping (306) the target avionic system into multiple destination avionic systems using a mapping algorithm and with reference to a clearance database (118), the destination avionic system being a specific avionic system associated with the general category of avionic system, the clearance database containing contextual information to link avionic data to a respective destination avionic system;
storing, in a clearance database, execution data comprising the ATC message, the target avionic system, the multiple destination avionic systems and the respective avionic data;
rendering (310), on the ATCT page, a target UI button (406) to indicate the target avionic system in the ATC message;
displaying, responsive to a user selection of the target UI button, a data preview window (408) comprising the respective avionic data and, for each of the multiple destination avionic systems, a respective GUI object (412, 44, 416, 418, 420, 422) representing the destination avionic system;
determining, at a coordinator module, from the data preview window, a user-selected destination avionic system from among the multiple destination avionic systems; and
sending (314) the avionic data to the user-selected destination avionic system, responsive to a user selection of the GUI object representing the destination avionic system.

8. The method of claim 7, further comprising:
detecting user activity on a cockpit display page;
referencing the clearance database having stored therein, execution data comprising the ATC message, the target avionic system, the destination avionic system, and the respective avionic data to determine whether any execution data is relevant to the user activity on the cockpit display page, responsive to the user activity on the cockpit display page.

9. The method of claim 7, wherein a FMS page is rendered on a display system fixed within the aircraft, and the ATCT page is on a personal electronic device, and further comprising:
responsive to detecting user activity on the FMS page, (i) searching the clearance database for a relevant entry, and (ii) overlaying a relevant conversation window on the ATCT page, the relevant conversation window rendering an alphanumeric message associated with the relevant entry.

## Patentansprüche

1. System, das eine Benutzerschnittstelle (UI) zwischen einer Luftverkehrskontrolltranskriptions-(ATCT-)Seite auf einer tragbaren Vorrichtung und einem Bestimmungsort-Avioniksystem bereitstellt, das System umfassend: ein Parser-Modul (202), das dazu konfiguriert ist:
eine Luftverkehrskontroll-(ATC-)Nachricht zu empfangen;
die ATC-Nachricht in ein Ziel-Avioniksystem und jeweilige Avionikdaten zu parsen, wobei das Ziel-Avioniksystem eine allgemeine Kategorie eines Avioniksystems ist und eines oder mehrere von Folgendem umfasst: ein Funksystem, ein Start- und Landedaten-(TOLD-)System, ein Bodennähewarn-(EGWPS-)System, ein Anzeigesystem, ein Flugmanagementsystem (FMS), ein Verkehrskollisions- und -vermeidungs-(TCAS-)System, ein Flugzeuglichtersystem, ein Flugzeugrädersystem, ein Flugzeugbremsensystem und ein Startbahn-Warn- und Hinweis-(RAAS-)System;
das Ziel-Avioniksystem unter Verwendung eines Zuordnungsalgorithmus und unter Bezugnahme auf eine Freigabedatenbank (118) in mehrere Bestimmungsort-Avioniksysteme zuzuordnen, wobei das Bestimmungsort-Avioniksystem ein spezifisches Avioniksystem der allgemeinen Kategorie eines Avioniksystems ist, wobei die Freigabedatenbank Kontextinformationen enthält, um Avionikdaten mit einem jeweiligen Bestimmungsort-Avioniksystem zu verknüpfen; und
in der Freigabedatenbank Ausführungsdaten zu speichern, umfassend die ATC-Nachricht, das Ziel-Avioniksystem, die mehreren Bestimmungsort-Avioniksysteme und die jeweiligen Avionikdaten; und
ein Benutzerschnittstellen-(UI-)Generatormodul (204), das dazu konfiguriert ist:
auf der ATCT-Seite eine Ziel-UI-Taste (406) wiederzugeben, um das Ziel-Avioniksystem in der ATC-Nachricht anzugeben;
als Antwort auf eine Benutzerauswahl der Ziel-UI-Taste ein Datenvorschaufenster (408) anzuzeigen, umfassend die jeweiligen Avionikdaten und, für jedes der mehreren Bestimmungsort-Avioniksysteme, ein jeweiliges GUI-Objekt (412, 414, 416, 418, 420, 422), das das Bestimmungsort-Avioniksystem darstellt; und
wobei ein Koordinatormodul (206) dazu konfiguriert ist, aus dem Datenvorschaufenster ein benutzerausgewähltes Bestimmungsort-Avioniksystem aus den mehreren Bestimmungsort-Avioniksystemen zu bestimmen und als Antwort auf eine Benutzerauswahl des GUI-Objekts, das das Bestimmungsort-Avioniksystem darstellt, die Avionikdaten an das benutzerausgewählte Bestimmungsort-Avioniksystem zu senden.

2. System nach Anspruch 1, wobei die Avionikdaten in dem Datenvorschaufenster bearbeitbar sind.

3. System nach Anspruch 1, wobei
das Parser-Modul (202) ferner dazu konfiguriert ist:
die ATC-Nachricht in zwei oder mehrere Ziel-Avioniksysteme zu parsen, die jeweils jeweilige Avionikdaten aufweisen;
für jedes der zwei oder mehreren Ziel-Avioniksysteme das Ziel-Avioniksystem einem jeweiligen Bestimmungsort-Avioniksystem zuzuordnen; und
für jedes der zwei oder mehreren Ziel-Avioniksysteme das Ziel-Avioniksystem, das Bestimmungsort-Avioniksystem und die jeweiligen Avionikdaten als eine Datenkette zu speichern;
das Benutzerschnittstellen-(UI-)Generatormodul ferner dazu konfiguriert ist:
für jedes der zwei oder mehreren Ziel-Avioniksysteme auf der ATCT-Seite eine jeweilige Ziel-UI-Taste wiederzugeben, um das Ziel-Avioniksystem anzugeben;
als Antwort auf eine Benutzerauswahl einer Ziel-UI-Taste aus den zwei oder mehreren Ziel-UI-Tasten das Datenvorschaufenster anzuzeigen, umfassend, für die ausgewählte Ziel-UI-Taste, die jeweiligen Avionikdaten und ein GUI-Objekt, das das Bestimmungsort-Avioniksystem darstellt.

4. System nach Anspruch 5, wobei das Datenvorschaufenster ferner ein nächstes UI-Objekt umfasst, und wobei das Koordinatormodul ferner dazu konfiguriert ist, als Antwort auf eine Benutzerauswahl des nächsten UI-Objekts das Datenvorschaufenster zu schließen und die ATCT-Seite wiederherzustellen.

5. System nach Anspruch 1, wobei das Koordinatormodul (206) ferner dazu konfiguriert ist: zu bestimmen, dass eine Cockpitanzeigeseite auf einem Anzeigesystem in dem Flugzeug wiedergegeben wird; und als Antwort auf das Erkennen einer Benutzeraktivität auf der Cockpitanzeigeseite, (i) die Ausführungsdaten auf einen relevanten Eintrag für die Benutzeraktivität zu durchsuchen, wobei der relevante Eintrag so definiert ist, dass er einen Parameter aufweist, der für die ausgewählte Benutzeraktivität verwendet wird, und (ii) ein relevantes Konversationsfenster über die ATCT-Seite auf der tragbaren Vorrichtung zu überblenden, wobei das relevante Konversationsfenster eine alphanumerische Nachricht wiedergibt, die dem relevanten Eintrag zugehörig ist.

6. System nach Anspruch 7, wobei der für den Vorgang verwendete Parameter eines oder mehrere von Folgendem beinhaltet: eine Höhe, eine Bodengeschwindigkeit, eine Lufttemperatur, eine Beschränkung, eine Frequenz, einen Wegpunkt, eine Startbahn, eine Ankunftsvorgehensweise und eine Abflugvorgehensweise.

7. Verfahren zum Bereitstellen einer Benutzerschnittstelle (UI) zwischen einer Luftverkehrskontrolltranskriptions-(ATCT-)Seite auf einer tragbaren Vorrichtung und einem Bestimmungsort-Avioniksystem, das Verfahren umfassend:
an einer Steuerschaltung,
Empfangen (302) einer Luftverkehrskontroll-(ATC-)Nachricht;
Parsen (304) der ATC-Nachricht in ein Ziel-Avioniksystem und jeweilige Avionikdaten,
wobei das Ziel-Avioniksystem eine allgemeine Kategorie eines Avioniksystems ist und eines oder mehrere von Folgendem umfasst: ein Funksystem, ein Start- und Landedaten-(TOLD-)System, ein Bodennähewarn-(EGWPS-)System, ein Anzeigesystem, ein Flugmanagementsystem (FMS), ein Verkehrskollisions- und -vermeidungs-(TCAS-)System, ein Flugzeuglichtersystem, ein Flugzeugrädersystem, ein Flugzeugbremsensystem und ein Startbahn-Warn- und Hinweis-(RAAS-)System;
Zuordnen (306) des Ziel-Avioniksystems unter Verwendung eines Zuordnungsalgorithmus und unter Bezugnahme auf eine Freigabedatenbank (118) in mehrere Bestimmungsort-Avioniksysteme, wobei das Bestimmungsort-Avioniksystem ein spezifisches Avioniksystem ist, das der allgemeinen Kategorie eines Avioniksystems zugehörig ist, wobei die Freigabedatenbank Kontextinformationen enthält, um Avionikdaten mit einem jeweiligen Bestimmungsort-Avioniksystem zu verknüpfen;
Speichern, in einer Freigabedatenbank, von Ausführungsdaten, umfassend die ATC-Nachricht, das Ziel-Avioniksystem, die mehreren Bestimmungsort-Avioniksysteme und die jeweiligen Avionikdaten;
Wiedergeben (310), auf der ATCT-Seite, einer Ziel-UI-Taste (406), um das Ziel-Avioniksystem in der ATC-Nachricht anzugeben;
Anzeigen, als Antwort auf eine Benutzerauswahl der Ziel-UI-Taste, eines Datenvorschaufensters (408), umfassend die jeweiligen Avionikdaten und, für jedes der mehreren Bestimmungsort-Avioniksysteme, ein jeweiliges GUI-Objekt (412, 44, 416, 418, 420, 422), das das Bestimmungsort-Avioniksystem darstellt;
Bestimmen, an einem Koordinatormodul, aus dem Datenvorschaufenster, eines benutzerausgewählten Bestimmungsort-Avioniksystems aus den mehreren Bestimmungsort-Avioniksystemen; und
Senden (314) der Avionikdaten an das benutzerausgewählte Bestimmungsort-Avioniksystem, als Antwort auf eine Benutzerauswahl des GUI-Objekts, das das Bestimmungsort-Avioniksystem darstellt.

8. Verfahren nach Anspruch 7, ferner umfassend:
Erkennen einer Benutzeraktivität auf einer Cockpitanzeigeseite;
Bezugnehmen auf die Freigabedatenbank, die darin gespeicherte Ausführungsdaten aufweist, umfassend die ATC-Nachricht, das Ziel-Avioniksystem, das Bestimmungsort-Avioniksystem und die jeweiligen Avionikdaten, um zu bestimmen, ob irgendwelche Ausführungsdaten für die Benutzeraktivität auf der Cockpitanzeigeseite relevant sind, als Antwort auf die Benutzeraktivität auf der Cockpitanzeigeseite.

9. Verfahren nach Anspruch 7, wobei eine FMS-Seite auf einem innerhalb des Flugzeugs angebrachten Anzeigesystem wiedergegeben wird, und die ATCT-Seite auf einer persönlichen elektronischen Vorrichtung ist, und ferner umfassend:
als Antwort auf das Erkennen einer Benutzeraktivität auf der FMS-Seite, (i) Durchsuchen der Freigabedatenbank auf einen relevanten Eintrag und (ii) Überblenden eines relevanten Konversationsfensters über die ATCT-Seite, wobei das relevante Konversationsfenster eine alphanumerische Nachricht wiedergibt, die dem relevanten Eintrag zugehörig ist.

## Revendications

1. Système fournissant une interface utilisateur (UI) entre une page de transcription de contrôle de trafic aérien (ATCT) sur un dispositif mobile et un système avionique de destination, le système comprenant : un module analyseur (202) configuré pour :
recevoir un message de contrôle de trafic aérien (ATC) ;
analyser le message ATC dans un système avionique cible et des données avioniques respectives, le système avionique cible étant une catégorie générale de système avionique et comprenant un ou plusieurs des éléments suivants : un système radio, un système de données d'atterrissage et de décollage (TOLD), un système d'avertissement de proximité au sol (EGWPS), un système d'affichage, un système de gestion de vol (FMS), un système de collision et d'évitement de trafic (TCAS), un système d'éclairage d'aéronef, un système de roues d'aéronef, un système de freinage d'aéronef et un système de connaissance et de conseil de piste (RAAS) ;
mapper le système avionique cible dans de multiples systèmes avioniques de destination en utilisant un algorithme de mappage et avec référence à une base de données d'autorisation (118), le système avionique de destination étant un système avionique spécifique de la catégorie générale du système avionique, la base de données d'autorisation contenant des informations contextuelles pour lier des données avioniques à un système avionique de destination respectif ; et
stocker, dans la base de données d'autorisation, des données d'exécution comprenant le message ATC, le système avionique cible, les multiples systèmes avioniques de destination et les données avioniques respectives ; et
un module générateur d'interface utilisateur (UI) (204) configuré pour :
rendre, sur la page ATCT, un bouton UI cible (406) pour indiquer le système avionique cible dans le message ATC ;
afficher, en réponse à une sélection utilisateur du bouton UI cible, une fenêtre de prévisualisation de données (408) comprenant les données avioniques respectives et, pour chacun des multiples systèmes avioniques de destination, un objet GUI (412, 414, 416, 418, 420, 422) respectif représentant le système avionique de destination ; et
dans lequel le module coordinateur (206) est configuré pour déterminer, à partir de la fenêtre de prévisualisation de données, un système avionique de destination sélectionné par l'utilisateur parmi les multiples systèmes avioniques de destination, et envoyer les données avioniques au système avionique de destination sélectionné par l'utilisateur, en réponse à une sélection utilisateur de l'objet GUI représentant le système avionique de destination.

2. Système selon la revendication 1, dans lequel les données avioniques dans la fenêtre de prévisualisation de données sont éditables.

3. Système selon la revendication 1, dans lequel
le module analyseur (202) est en outre configuré pour :
analyser le message ATC dans au moins deux systèmes avioniques cibles, chacun présentant des données avioniques respectives ;
pour chacun des au moins deux systèmes avioniques cibles, mapper le système avionique cible à un système avionique de destination respectif ; et
pour chacun des au moins deux systèmes avioniques cibles, stocker, en tant que chaîne de données, le système avionique cible, le système avionique de destination et les données avioniques respectives ;
le module générateur d'interface utilisateur (UI) est en outre configuré pour :
pour chacun des au moins deux systèmes avioniques cibles, rendre, sur la page ATCT, un bouton UI cible respectif pour indiquer le système avionique cible ;
afficher, en réponse à une sélection utilisateur d'un bouton UI cible parmi les au moins deux boutons UI cibles, la fenêtre de prévisualisation de données comprenant, pour le bouton UI cible sélectionné, les données avioniques respectives et un objet GUI représentant le système avionique de destination.

4. Système selon la revendication 5, dans lequel la fenêtre de prévisualisation de données comprend en outre un objet UI suivant, et dans lequel le module coordinateur est en outre configuré pour fermer la fenêtre de prévisualisation de données et restaurer la page ATCT, en réponse à une sélection utilisateur de l'objet UI suivant.

5. Système selon la revendication 1, dans lequel le module coordinateur (206) est en outre configuré pour : déterminer qu'une page d'affichage de cockpit est rendue sur un système d'affichage dans l'aéronef ; et en réponse à la détection d'une activité utilisateur sur la page d'affichage de cockpit, (i) rechercher, dans les données d'exécution, une entrée pertinente pour l'activité utilisateur, l'entrée pertinente étant définie comme présentant un paramètre utilisé pour l'activité utilisateur sélectionnée, et (ii) superposer une fenêtre de conversation pertinente sur la page ATCT sur le dispositif mobile, la fenêtre de conversation pertinente rendant un message alphanumérique associé à l'entrée pertinente.

6. Système selon la revendication 7, dans lequel le paramètre utilisé pour l'opération inclut un ou plusieurs des éléments suivants : une altitude, une vitesse au sol, une température d'air, une contrainte, une fréquence, un point de trajet, une piste, une procédure d'arrivée et une procédure de départ.

7. Procédé fournissant une interface utilisateur (UI) entre une page de transcription de contrôle de trafic aérien (ATCT) sur un dispositif mobile et un système avionique de destination, le procédé comprenant :
au niveau d'un circuit de contrôle,
la réception (302) d'un message de contrôle de trafic aérien (ATC) ;
l'analyse (304) du message ATC dans un système avionique cible et des données avioniques respectives,
le système avionique cible étant une catégorie générale de système avionique et comprenant un ou plusieurs des éléments suivants : un système radio, un système de données d'atterrissage et de décollage (TOLD), un système d'avertissement de proximité au sol (EGWPS), un système d'affichage, un système de gestion de vol (FMS), un système de collision et d'évitement de trafic (TCAS), un système d'éclairage d'aéronef, un système de roues d'aéronef, un système de freinage d'aéronef et un système de connaissance et de conseil de piste (RAAS) ;
le mappage (306) du système avionique cible dans de multiples systèmes avioniques de destination en utilisant un algorithme de mappage et avec référence à une base de données d'autorisation (118), le système avionique de destination étant un système avionique spécifique associé à la catégorie générale du système avionique, la base de données d'autorisation contenant des informations contextuelles pour lier des données avioniques à un système avionique de destination respectif ;
le stockage, dans une base de données d'autorisation, de données d'exécution comprenant le message ATC, le système avionique cible, les multiples systèmes avioniques de destination et les données avioniques respectives ;
le rendu (310), sur la page ATCT, d'un bouton UI cible (406) pour indiquer le système avionique cible dans le message ATC ;
l'affichage, en réponse à une sélection utilisateur du bouton UI cible, d'une fenêtre de prévisualisation de données (408) comprenant les données avioniques respectives et, pour chacun des multiples systèmes avioniques de destination, un objet GUI (412, 44, 416, 418, 420, 422) respectif représentant le système avionique de destination ;
la détermination, au niveau d'un module coordinateur, à partir de la fenêtre de prévisualisation de données, d'un système avionique de destination sélectionné par l'utilisateur parmi les multiples systèmes avioniques de destination ; et
l'envoi (314) des données avioniques au système avionique de destination sélectionné par l'utilisateur, en réponse à une sélection utilisateur de l'objet GUI représentant le système avionique de destination.

8. Procédé selon la revendication 7, comprenant en outre :
la détection d'une activité utilisateur sur une page d'affichage de cockpit ;
le référencement de la base de données d'autorisation présentant, stockées sur celle-ci, des données d'exécution comprenant le message ATC, le système avionique cible, le système avionique de destination et les données avioniques respectives pour déterminer si une quelconque donnée d'exécution est pertinente pour l'activité utilisateur sur la page d'affichage de cockpit, en réponse à l'activité utilisateur sur la page d'affichage de cockpit.

9. Procédé selon la revendication 7, dans lequel une page FMS est rendue sur un système d'affichage fixé à l'intérieur de l'aéronef, et la page ATCT est sur un dispositif électronique personnel, et comprenant en outre :
en réponse à la détection d'une activité utilisateur sur la page FMS, (i) rechercher, dans la base de données d'autorisation, une entrée pertinente, et (ii) superposer une fenêtre de conversation pertinente sur la page ATCT, la fenêtre de conversation pertinente rendant un message alphanumérique associé à l'entrée pertinente.
